# EUROPEAN PATENT APPLICATION

(11) **EP 4 432 476 A1**
(43) Date of publication of application: **18.09.2024**
(21) Application number: 24162824.7
(22) Date of filing: 12.03.2024
(51) Int. Cl.: H01R 4/30, H01R 4/34, H01R 4/70, H01R 11/28, H01R 13/52, H01R 11/12, H01R 13/506

(54) **CONNECTOR ASSEMBLY FOR BATTERY MODULES OF AN ELECTRIC VEHICLE**

(30) Priority: 14.03.2023 IT 202300004809
(71) Applicant: TE Connectivity Italia Distribution S.r.l., 10093 Collegno (TO) (IT)
(72) Inventor: FARINOLA, Marcello, Collegno (IT); GENTA, Alessandro, Collegno (IT)
(74) Representative: Grünecker Patent- und Rechtsanwälte PartG mbB

(57) **Abstract**

It is hereby disclosed a connector assembly (1) for battery modules (M) of an electric vehicle, comprising:
- a connector element (2) and a counterpart (3) arranged to be mutually connected in an electrically conductive manner,
- the connector element (2) comprising a protective casing (4) having an outer collar (4') configured for coupling with the counterpart (3),
- an electrical connection unit (5) having opposite ends adapted for electrically connecting two connector assemblies (1) positioned on respective battery modules (M),
- a fastening unit (7) comprising a connection screw (8) axially positioned within the outer collar (4') and engaged with the counterpart (3),
- an integrated sealing system to prevent water infiltration into the connector element (2) or the counterpart (3),
- a locking ring (22) to lock in position the screw (8) inserted inside the outer collar (4') even when not fixed to the counterpart (3), wherein said locking ring (22) comprises at least one locking flange (23) cooperating with a locking shoulder (24) formed along the inner surface of the outer collar (4').

## Description

### FIELD OF THE INVENTION

The present invention relates to a connector assembly for battery modules of an electric vehicle, comprising:
- a connector element and a counterpart arranged to be mutually connected in an electrically conductive manner, along a connection direction,
- the connector element comprising a protective casing having an outer collar electrically insulated and configured for coupling with a receiving portion of the counterpart,
- an electrical connection unit having opposite ends adapted for electrically connecting two connector assemblies positioned on respective battery modules, wherein for each end, the electrical connection unit comprises a connection end connected to the connector element,
- a fastening unit comprising a connection screw axially positioned within the outer collar and engaged with the counterpart.

### STATE OF THE ART

Connectors of the above type are made to electrically connect several battery modules that form a battery pack mounted on an electrically driven vehicle.

Document DE 10 2021 117 336 describes a connector assembly for such an application, comprising two connector parts connected together by a connection screw.

In general, in the field of electrical connectors for battery modules, the need to simplify and make reliable electrical connections between the various components has now become a primary concern for manufacturers. With this in mind, the solution described in the above document can be further refined to overcome some drawbacks.

### OBJECT OF THE INVENTION

The object of the present invention is to provide a connector assembly of the above type that is extremely simple and functioning, while ensuring total reliability in use.

A further object of the present invention is to provide a method for assembling such a connector assembly, which makes assembly operations extremely intuitive.

### SUMMARY OF THE INVENTION

In order to achieve one or more of the above objects, the present invention relates to a connector assembly for battery modules of an electric vehicle, comprising:
- a connector element and a counterpart arranged to be mutually connected in an electrically conductive manner, along a connection direction,
- the connector element comprising a protective casing having an outer collar electrically insulated and configured for coupling with a receiving portion of the counterpart,
- an electrical connection unit having opposite ends adapted for electrically connecting two connector assemblies positioned on respective battery modules, wherein for each end, the electrical connection unit comprises a connecting end connected to the connector element,
- wherein the protective casing is made with a single body comprising said outer collar and a receiving portion for engagement with one end of the electrical connection unit,
- a fastening unit comprising a connection screw axially positioned within the outer collar and engaged with the counterpart,
- wherein the connection screw is further engaged with said connection end, so as to electrically connect the connector element, the counterpart and the electrical connection unit that, in turn, is connected to another connector assembly,
- an integrated sealing system to prevent water infiltration into the connector element or the counterpart,
- a locking ring to lock in place the screw inserted inside the outer collar, even when not fixed to the counterpart, wherein said locking ring comprises at least one locking flange cooperating with a locking shoulder formed along the inner surface of the outer collar.

In one or more embodiments, the sealing system comprises a first sealing element configured as an annular gasket positioned within a receiving seat formed along a lower portion of the outer collar engaged with a cup portion of the counterpart.

In one or more embodiments, the sealing system comprises a second sealing element configured as an annular gasket radially superimposed over an end portion of the electrical connection unit, said second sealing element being positioned within the receiving portion of the protective casing, in the final assembled configuration.

In one or more embodiments, the sealing system comprises a third sealing element configured as an annular gasket fixed within a coupling portion of a cover engaged with an upper edge of the outer collar.

In one or more embodiments, the locking ring comprises a pair of locking flanges cooperating with a pair of locking shoulders, respectively, wherein, during assembly,
- the locking ring is axially inserted onto the top cap of the screw, with the flanges oriented in an offset position with respect to the shoulders, to enable axial insertion of the ring along the collar, up to the base portion of the cap,
- the locking ring is rotated about the axis of the screw, so that the shoulders are vertically superimposed over the flanges.

In one or more embodiments, each flange comprises a respective flexible locking tab carrying a contact tooth suitable for being reciprocally engaged against a lateral edge of a locking shoulder.

The invention is also directed to a method for assembly as set forth in the appended claims.

### BRIEF DESCRIPTION OF THE FIGURES

Additional features and advantages of the present invention will result from the following description with reference to the attached drawings provided as a non-limiting example only, in which:
- Figure 1 is a perspective view illustrating a preferred embodiment of a connector assembly according to the invention, in the connected configuration;
- Figure 2 is an exploded perspective view of a connector element shown in the previous figure;
- Figure 3 is a perspective view of a top cover that is part of the connector element shown in the previous figure;
- Figures 4, 5 are further perspective views of a protective casing and a locking ring, respectively, already shown in Figure 2;
- Figures 6, 7 are elevation views illustrating some steps of the method for assembling the connector assembly;
- Figure 8 is a cross-sectional view of the connector assembly, according to the plane VIII-VIII shown in Figure 1; and
- Figure 9 is a further cross-sectional view of the connector assembly in the final assembled configuration.

### DETAILED DESCRIPTION OF MULTIPLE EMBODIMENTS

The following description illustrates various specific details aimed at a thorough understanding of the examples of the one or more embodiments. The embodiments may be implemented without one or more of the specific details, or with other methods, components, materials, etc. In other cases, known structures, materials or operations are not shown or described in detail to avoid obscuring various aspects of the embodiments. Reference to "an embodiment" within this description is to indicate that a particular configuration, structure, or feature described in connection with the embodiment is included in at least one embodiment. Therefore, expressions such as "in an embodiment", possibly found in different places in this description, do not necessarily refer to the same embodiment. In addition, particular configurations, structures, or features may be combined appropriately in one or more embodiments and/or associated with embodiments in ways other than as illustrated here, so that, for example, a feature exemplified here in relation to one figure may be applied to one or more embodiments exemplified in a different figure.

The references shown here are for convenience only and thus do not limit the scope of protection or the extent of the embodiments.

It is also to be noted that only those elements useful for understanding the invention are described in the following description, assuming, for example, that the connector assembly may include additional basic elements known per se that are necessary for its operation.

In the attached drawings, reference 1 indicates a preferred embodiment of a connector assembly, as a whole, according to the invention, made to electrically connect several battery modules M that form a battery pack mounted on an electrically driven vehicle.

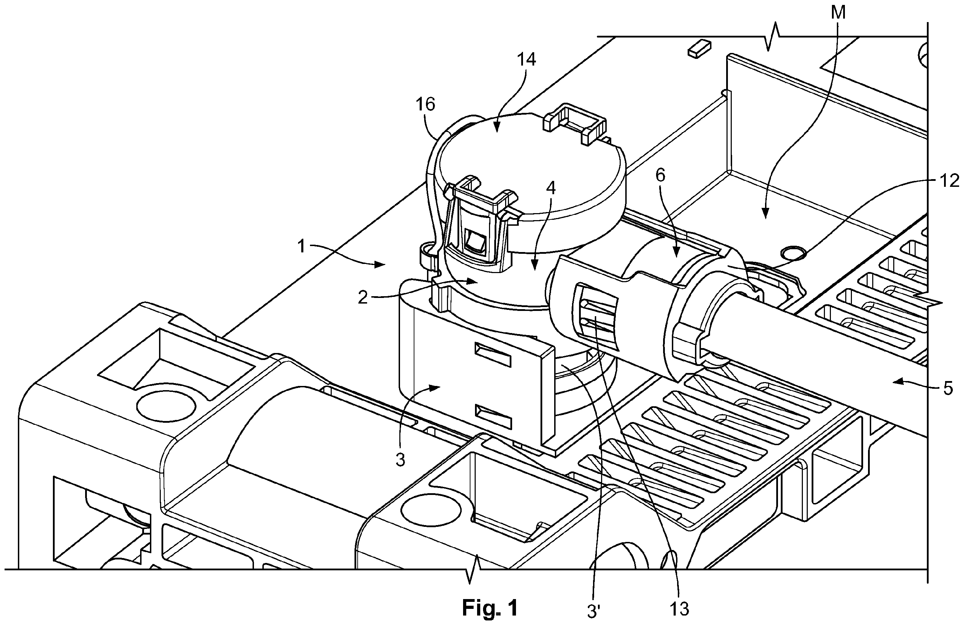

Figure 1 shows a preferred embodiment of the connector assembly 1 in a connected state. The connector assembly 1 comprises a connector element 2 configured to be coupled with a counterpart 3 already mounted on a respective battery module M, thus achieving, at the same time, mechanical and electrical coupling, along a connection direction.

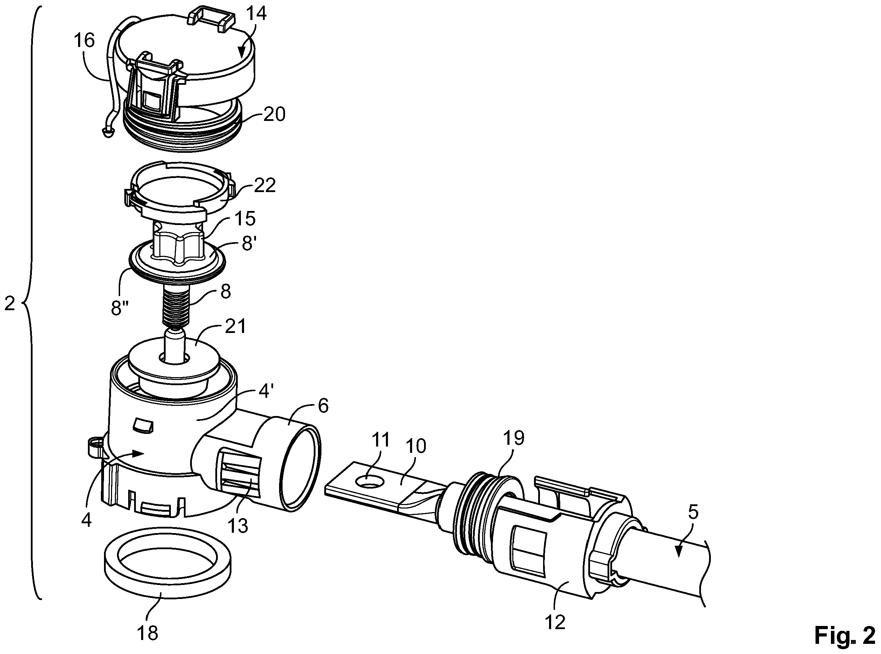

Figure 2 is an exploded perspective view illustrating the components that form the connector element 2.

The connector element 2 comprises a protective casing 4 having an outer collar 4' electrically insulated and configured for coupling with the counterpart 3. The counterpart 3 comprises an electrically insulated tactile protection, which defines a receiving portion suitable for receiving a lower portion of the outer collar 4, along the connection direction.

Reference 5 denotes an electrical connection unit, partially illustrated in Figures 1, 2, 8, suitable for electrically connecting two connector assemblies 1 positioned on respective modules M of the battery assembly of the vehicle. The electrical connection unit 5 may be configured as a bundle of connection cables included axially along a tubular casing having opposite ends configured for connection to the respective connector assembly 1 in the assembled configuration.

In one or more embodiments, the protective casing 4 of the connector element 2 is made as a single body comprising said outer collar 4', and a receiving portion 6 for engaging with an end portion of the electrical connection unit 5. With reference to the illustrated embodiment, the receiving portion 6 forms an additional outer collar oriented perpendicularly with respect to the outer collar 4' for coupling with the counterpart 3. In fact, with reference to the configuration illustrated in Figure 1, the outer collar 4' is coupled with the counterpart 3 along a vertical direction, and the end of the electrical connection unit 5 is engaged with the receiving portion 6 along a horizontal direction. Thus, it will be appreciated that, in the configuration illustrated in Figure 1, the tubular casing of the electrical connection unit 5 extends along said horizontal direction, perpendicular to the connection direction between the connector element 2 and the counterpart 3.

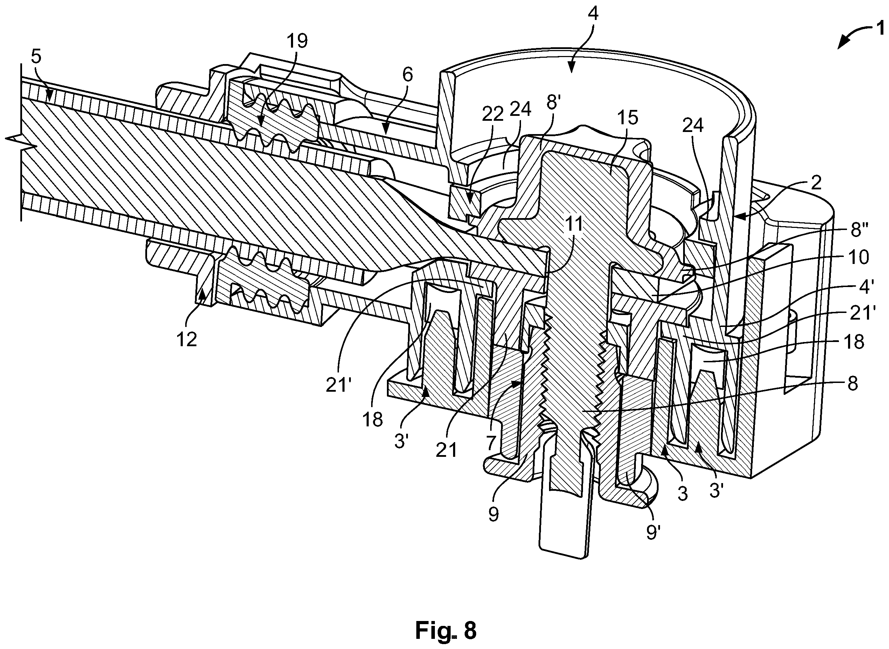

The connector assembly 1 comprises a fastening unit 7 configured to fasten the connector element 2 to the counterpart 3. With reference to Figures 2, 8, the fastening unit 7 comprises a connection screw 8 axially positioned within the outer collar 4', and coupled with a nut element 9 arranged within the collar of the counterpart 3, so as to establish the connection between the connector element 2 and the counterpart 3. According to a further feature, in the final connected configuration, the connection screw 8 is also coupled with a connection end 10 of the electrical connection unit 5, through a fastening hole 11 cut on the connection end 10, so as to establish the electrical connection between the connector element 2, the counterpart 3, and the electrical connection unit 5 that is, in turn, connected to another connector assembly 1. In the final assembled configuration, it will then be appreciated that the end portion of the connection unit 5 is spaced within the receiving portion 6 of the casing 4, so that the fastening hole 11 is axially coupled with the screw 8 connecting the connector element 2 with the counterpart 3. The screw 8 also engages a contact ring 21 positioned within the collar 4' and having opposite faces respectively in contact with the connection end 10 of the connection unit 5 and a corresponding surface 21' formed within the collar 4'.

Preferably, the electrical connection unit 5 comprises a coupling flange 12 suitable for engaging with respective ribs 13 cut along the outer surface of the receiving portion 6 (Figures 1,2,8).

To establish the electrical connection, the fastening unit 7 is made of an electrically conductive material, and the nut element 9 is also mounted in contact with a portion of the electric contact portion 9' centrally located within the tactile protection of the counterpart 3.

According to a further feature, the connector assembly 1 comprises an electrically insulated top cover 14 arranged to close the connector element 2 above the head 15 of the connecting screw 8, i.e., in a position opposite to the counterpart 3. When observing the assembled configuration of Figure 1, it is thus to be noted that the connection direction extends along a substantially vertical axis, in which a lower portion of the connector element 2 is coupled with the counterpart 3 attached to an upper surface of the battery module M. The cover 14 is then engaged with an open upper end of the protective casing 4 of the connector element 2.

According to an additional preferred feature, the cover 14 comprises an elastic retaining element 16, such as a retaining rope, having opposite ends respectively connected to the cover wall of the cover 14 and to the protective casing 4 of the connector element 2.

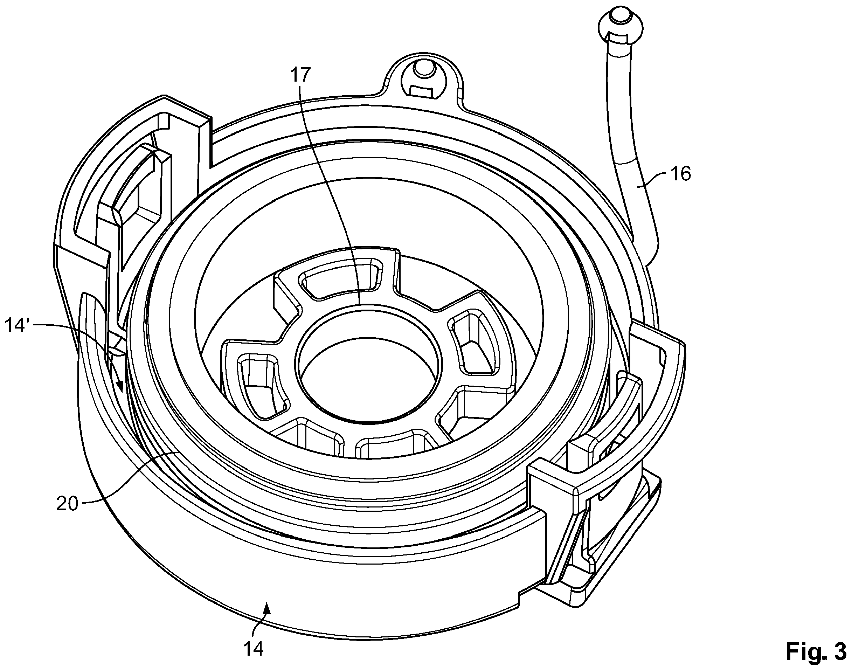

According to a further preferred feature illustrated in Figures 3, 8, the cover 14 comprises a corresponding element 17 protruding from the inner surface of the upper end plate (protruding toward the screw head in the final assembled configuration). The protruding element 17 is arranged to contact the screw head 15 when the screw 8 is not properly secured with its counterpart 3, thereby giving a warning to the assembly operator.

According to a further feature of the invention, the connector assembly 1 comprises an integrated sealing system to prevent water infiltration within the connector element 2 or the counterpart 3.

In one or more embodiments, the sealing system comprises a first sealing element 18 configured as an annular gasket, positioned within a receiving seat formed along the lower portion of the outer collar 4'. The receiving seat is sized to accommodate the first sealing element 18 and to make a lock with a cup portion 3' of the counterpart 3, so that the annular gasket is interposed between the counterpart 3 and the lower portion of the casing 4 of the connector element 2.

In one or more embodiments, the sealing system comprises a second sealing element 19 configured in the form of an annular gasket engaged on an end portion of the electrical connection unit 5. More in particular, the second sealing element 19 is arranged between the connection end 10 connected with the connection screw 8 and the mating flange 12, so that in the final assembled configuration, the annular gasket is engaged within the receiving portion 6 of the protective casing 4 of the connector element 2.

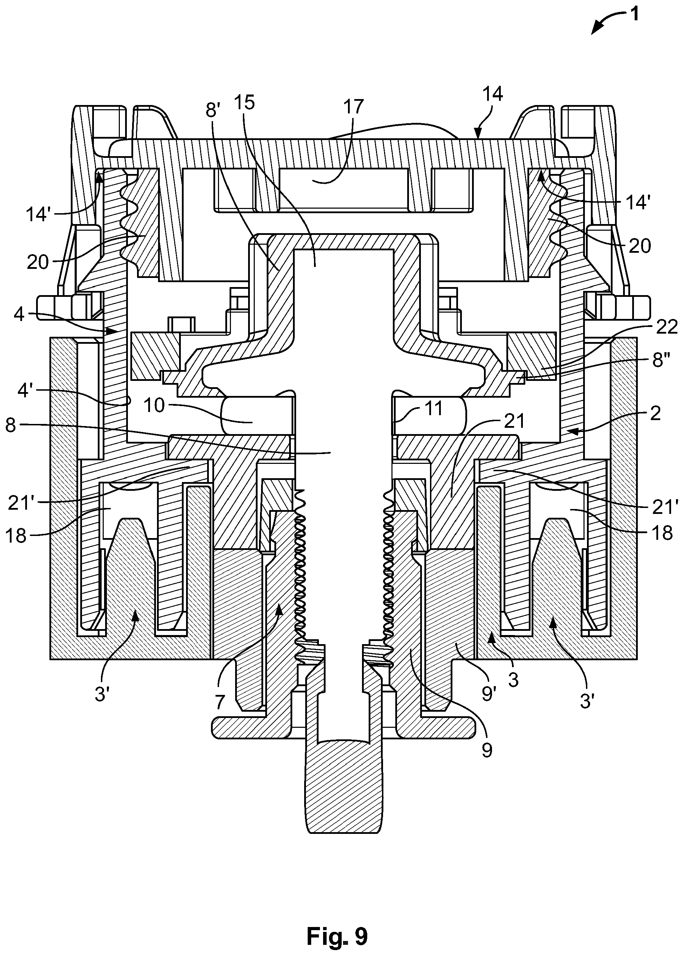

In one or more embodiments, the sealing system comprises a third sealing element 20 configured as an annular gasket fixed within a coupling portion 14' of the cover 14 engaged with the top edge of the outer collar 4'. When observing Figure 9, it is thus to be noted that the coupling portion 14' is formed by an outer side wall of the cover 14 and an inner side wall along which the annular gasket is externally mounted.

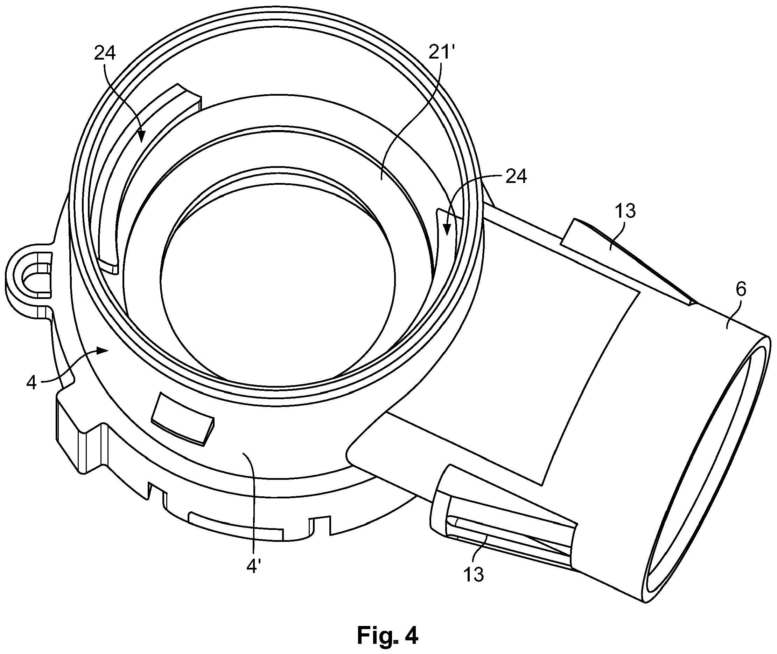

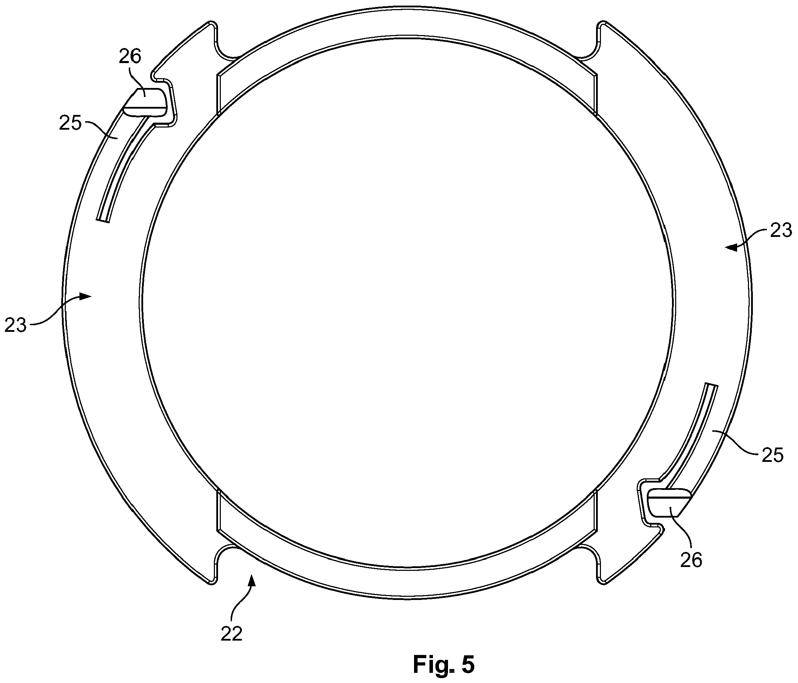

According to a further feature of the invention, the connector assembly 1 comprises a locking ring 22 of the screw, fixed within the protective casing 4 of the connector element 2 and cooperating with at least one locking element formed within the outer collar 4', for the purpose of keeping the screw 8 in place even when not attached to the counterpart 3. The fixing screw 8 comprises an electrically insulated top cap 8' that is put on the head 15 of the screw. The locking ring 22 is sized to be radially mounted on a base portion 8" of the top cap 8'. According to a preferred embodiment illustrated in Figures 4-7, the locking ring 22 comprises two locking flanges 23 cooperating with respective locking shoulders 24 formed along the inner surface of the cylindrical wall of the outer collar 4'.

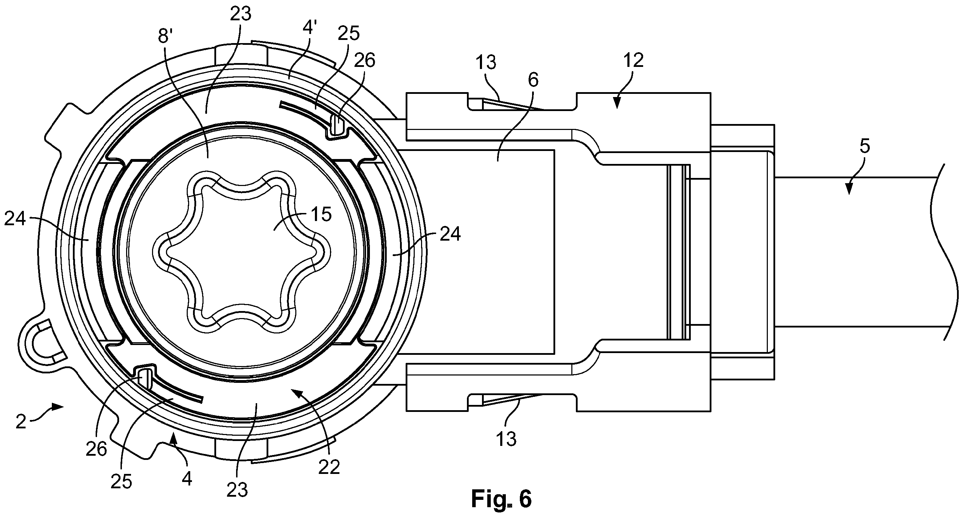

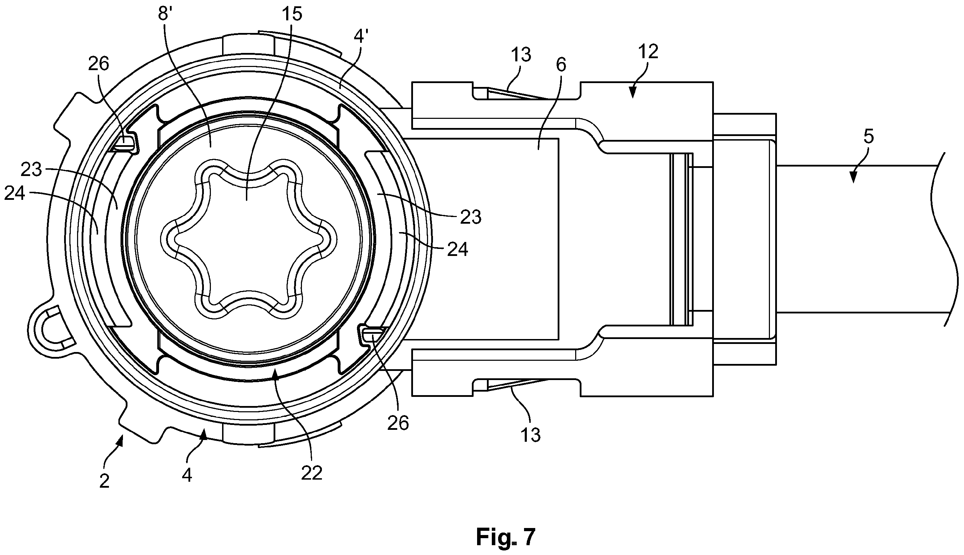

During assembly, after inserting the locking screw 8 within the outer collar 4', the hole 11 of the connection end 10 and the contact ring 21, the locking ring 22 is put around the cap 8' of the screw, with its flanges 23 oriented in an offset position with respect to the shoulders 24 (Figure 6), so that the ring 21 can be axially inserted along the collar 4', thus overcoming the volume of the locking shoulders 24. Once the locking ring 22 is positioned against the base edge of the cap 8' put on the screw head, the ring 22 can be rotated so that the flanges 23 are vertically aligned with the shoulders 24 (figure 7). In a practical illustrative embodiment, the rotation of the locking ring 22 is performed at an angle of 90°. In one or more embodiments, the rotation of the locking ring 22 is performed by using an assembly tool having an operating head conformed to cooperate with the ring 22 and the outer collar 4' with the shoulders 24.

According to a further preferred feature illustrated in Figures 6, 7, each flange 23 carries a respective flexible locking tab 25 bearing a contact tooth 26 suitable for being mutually engaged against a lateral edge of a locking shoulder 24. During rotation of the locking ring 22, the flexible tabs 25 with teeth 26 rotate integrally with the ring 22, by passing under a respective shoulder 24, until, in the final configuration, the end of each tab 25 is raised thus realizing the contact between the tooth 26 and the lateral edge of a shoulder 24.

In accordance with the structure previously described, the invention is also directed to a method for assembling the connector assembly 1 having the features described above, comprising:
- inserting the contact ring 21 within the connector element 2 and making it rest against the corresponding surface 21',
- placing an end portion of the electrical connection unit 5 within the receiving portion 6 of the connector element 2,
- inserting the connecting screw 8 within the outer collar 4', by engaging the contact ring 21 and the fastening hole 11 of the end portion of the electrical connection unit 5,
- assembling the locking ring 22 by axially inserting it along the cap 8' of the screw and by subsequently rotating it,
- connecting the connector element 2 with the counterpart 3.

As can be seen in the final assembled configuration shown in Figures 8, 9, the head of the screw is in contact with the connection end 10 of the connection unit 5, which is in turn in contact with the contact ring 21.

Of course, subject to the principles of this invention, the details of construction and embodiments may vary widely from what is described and illustrated as examples only, without departing from the scope of protection of the present invention.

### LIST OF REFERENCES

1 → Connector assembly
2 → Connector element
3 → Counterpart
   3' → cup portion
M → Battery module
4 → Protective casing
   4' → Outer collar
   6 → Receiving portion
   13 → ribs
5 → Electrical connection unit
   10 → Connection end
   11 → Fastening hole
   12 → Coupling flange
7 → Fastening unit
   8 → Connecting screw
   8' → Top cap
      8"→ Base portion
   15 → Head
   9 → Nut element
   9' → Electric contact portion
21 → Contact ring
21' → Resting surface
14 → Upper cover
   14' → Coupling portion
   16 → Elastic retaining element
   17 → Protruding element
18 → First sealing element
19 → Second sealing element
20 → Third sealing element
22 → Locking ring
   23 → Locking flanges
   25 → Flexible tab
   26 → Teeth
24 → Locking shoulders

## Claims

1. Connector assembly (1) for battery modules (M) of an electric vehicle, comprising:
- a connector element (2) and a counterpart (3) arranged to be mutually connected in an electrically conductive manner, along a connection direction,
- the connector element (2) comprising a protective casing (4) having an outer collar (4'), electrically insulated and configured for coupling with a receiving portion of the counterpart (3),
- an electrical connection unit (5) having opposite ends suitable for electrically connecting two connector assemblies (1) positioned on respective battery modules (M), wherein for each end, the electrical connection unit (5) comprises a connection end (10) connected to the connector element (2),
- wherein the protective casing (4) is made as a single body comprising said outer collar (4') and a receiving portion (6) for engagement with one end of the electrical connection unit (5),
- a fastening unit (7) comprising a connection screw (8) axially placed within the outer collar (4') and engaged with the counterpart (3),
- wherein the connection screw (8) is further engaged with said connection end (10), so as to electrically connect the connector element (2), the counterpart (3) and the electrical connection unit (5),
- an integrated sealing system to prevent water infiltration into the connector element (2) or the counterpart (3),
- a locking ring (22) to lock in place the screw (8) inserted inside the outer collar (4') even when not fixed to the counterpart (3), wherein said locking ring (22) comprises at least one locking flange (23) cooperating with a locking shoulder (24) formed along the inner surface of the outer collar (4').

2. Connector assembly (1) according to claim 1, wherein the sealing system comprises a first sealing element (18) configured as an annular gasket positioned within a receiving seat formed along a lower portion of the outer collar (4') engaged with a cup portion (3') of the counterpart (3).

3. Connector assembly (1) according to claim 1 or 2, wherein the sealing system comprises a second sealing element (19) configured as an annular gasket (19) radially superimposed over an end portion of the electrical connection unit (5), said second sealing element (19) being positioned within the receiving portion (6) of the protective casing (4), in the final assembled configuration.

4. Connector assembly (1) according to any of the preceding claims, wherein the receiving portion (6) forms a further outer collar oriented substantially along a direction perpendicular to the connection direction for connecting the connector element (2) and the counterpart (3).

5. Connector assembly (1) according to any of the preceding claims, wherein the connector assembly (1) comprises an electrically insulated top cover (14) coupled with an open top end of the protective casing (4), above a head portion (15) of the screw (8).

6. Connector assembly (1) according to claim 5, wherein the sealing system comprises a third sealing element (20) configured as an annular gasket fixed within a coupling portion (14') of the cover (14) engaged with an upper edge of the outer collar (4').

7. Connector assembly (1) according to claim 5 or 6, wherein the cover (14) comprises a protruding element (17) projecting from the inner surface of the upper closure plane, arranged to contact the head portion (15) when the screw (8) is not correctly fixed to the counterpart (3).

8. Connector assembly (1) according to any one of the preceding claims, wherein the connection screw (8) comprises an electrically insulated top cap (8'), the locking ring (22) being sized to mate with a base portion (8") of the top cap (8').

9. Connector assembly (1) according to claim 8, wherein the locking ring (22) comprises a pair of locking flanges (23) cooperating with a pair of locking shoulders (24), respectively, wherein, during assembly,
- the locking ring (22) is axially inserted onto the top cap (8'), with the flanges (23) oriented in an offset position with respect to the shoulders (24), to enable axial insertion of the ring (22) along the collar (4'), up to the base portion (8"),
- the locking ring (22) is rotated about the axis of the screw (8), so that the shoulders (24) result vertically superimposed over the flanges (23).

10. Connector assembly (1) according to claim 9, wherein each flange (23) comprises a respective flexible locking tab (25) carrying a contact tooth (26) configured for being reciprocally engaged against a lateral edge of a locking shoulder (24).

11. Method for assembling a connector assembly (1) according to claim 1, comprising:
- inserting one end of the electrical connection unit (5) into the receiving portion (6) of the connector element (2),
- inserting the connection screw (8) into the outer collar (4') and engaging a fastening hole (11) of the connection end (10),
- assembling the locking ring (22) by axial insertion along the top cap (8') of the screw (8) and subsequent rotation,
- connecting the connector element (2) with the counterpart (3).
